# EUROPEAN PATENT SPECIFICATION

(11) **EP 3 067 541 B1**
(45) Date of publication and mention of the grant of the patent: **01.12.2021**
(21) Application number: 16156559.3
(22) Date of filing: 19.02.2016
(51) Int. Cl.: F02K 3/06, F02K 3/077, F02C 3/107, F02C 7/36

(54) **GEARED TURBINE ENGINE**
GETRIEBEFAN
MOTEUR À TURBINE À ENGRENAGE

(30) Priority: 19.02.2015 US 201514626534
(43) Date of publication of application: 14.09.2016
(73) Proprietor: Raytheon Technologies Corporation, Farmington, CT 06032 (US)
(72) Inventor: SCHWARZ, Frederick M., Glastonbury, CT Connecticut 06033 (US); SHERIDAN, William G., Southington, CT Connecticut 06489 (US)
(74) Representative: Dehns

(56) References cited:
- EP-A1- 3 039 276
- EP-A2- 1 777 406
- EP-A2- 2 177 735
- EP-A2- 2 820 280
- WO-A2-2015/105594
- GB-A- 1 319 849
- US-A- 3 729 957
- US-A- 6 041 589
- US-A1- 2013 186 058
- US-A1- 2013 259 652
- US-A1- 2014 260 180
- KANDEBO S W: "BUILDING MOMENTUM EPI IS LOOKED AHEAD TO WIDEN ITS ENGINE OFFERINGS AND EXPAND ITS MARKETS", AVIATION WEEK AND SPACE TECHNOLOGY, MCGRAW-HILL COMPAGNY, NEW YORK, NY, US, vol. 158, no. 25, 23 June 2003 (2003-06-23), page 26/27, XP001167962, ISSN: 0005-2175

## Description

### BACKGROUND OF THE INVENTION

### 1. Technical Field

This disclosure relates generally to a geared turbine engine.

### 2. Background Information

Various types of turbine engines for propelling an aircraft are known in the art. One exemplary turbine engine type is a geared turbofan turbine engine. A typical geared turbofan turbine engine includes a gear train, a fan rotor and a core. Typically, the core consists essentially of a low speed spool and a high speed spool. The gear train connects the fan rotor to the low speed spool and enables the low speed spool to drive the fan rotor at a slower rotational velocity than that of the low speed spool. Another example of a geared turbofan turbine engine is disclosed in U.S. Patent No. 8,869,504 to Schwarz et al.. While such turbine engines have various advantages, there is still a need in the art for improvement.
US 6,041,589 A discloses a prior art turbine engine.
US 3,729,957 discloses a prior art fan.
US 2014/260180 A discloses a prior art gas turbine engine with a stream diverter.
EP 1 777 406 A2 discloses a prior art turbofan engine with counterrotating fans.
US 2013/259652 A1 discloses a prior art geared architecture with an inducer for a gas turbine engine.
EP 2 177 735 A2 discloses a prior art turbofan.
WO 2015/105594, which is prior art under Art. 54(3) EPC, discloses an ultra-high overall pressure ratio gas turbine engine.
US 2013/186058 A1 discloses prior art geared turbomachine fan and compressor rotation.

### SUMMARY OF THE DISCLOSURE

From a first aspect, the invention provides a turbine engine as recited in claim 1.

The first compressor rotor may include a first set of compressor blades and a second set of compressor blades downstream of the first set of compressor blades.

A leading edge of a first of the variable pitch fan blades may move in a forward direction as that blade moves from the first position to the second position.

The gear train may connect the fan rotor to a shaft. The shaft may connect the gear train and the first compressor rotor to the first turbine rotor.

The first compressor rotor may consist essentially of (only include) a rotor disk and a set of compressor blades arranged around and connected to the rotor disk.

The first compressor rotor may include a rotor disk, a first set of compressor blades and a second set of compressor blades. The first set of compressor blades may be arranged around and connected to the rotor disk. The second set of compressor blades may be arranged around and connected to the rotor disk downstream of the first set of compressor blades.

The foregoing features and the operation of the invention will become more apparent in light of the following description and the accompanying drawings.

### BRIEF DESCRIPTION OF THE DRAWINGS

FIG. 1 is a partial sectional illustration of an example geared turbofan turbine engine.
FIG. 2 is a partial schematic illustration of the turbine engine of FIG. 1.
FIG. 3 is a partial schematic illustration of an example of a low pressure compressor section.
FIG. 4 is a partial schematic illustration of another example geared turbofan turbine engine.
FIG. 5 is a partial schematic illustration of another example geared turbofan turbine engine that falls outside the wording of the claims.
FIG. 6 is a partial schematic illustration of another example geared turbofan turbine engine providing forward thrust that falls outside the wording of the claims.
FIG. 7 is a partial schematic illustration of the turbine engine of FIG. 6 providing reverse thrust that falls outside the wording of the claims.
FIG. 8 is a partial schematic illustration of another example geared turbofan turbine engine providing forward thrust.
FIG. 9 is a partial schematic illustration of the turbine engine of FIG. 8 providing reverse thrust.
FIG. 10 is a flow diagram of a method for manufacturing a plurality of turbine engines.

### DETAILED DESCRIPTION OF THE INVENTION

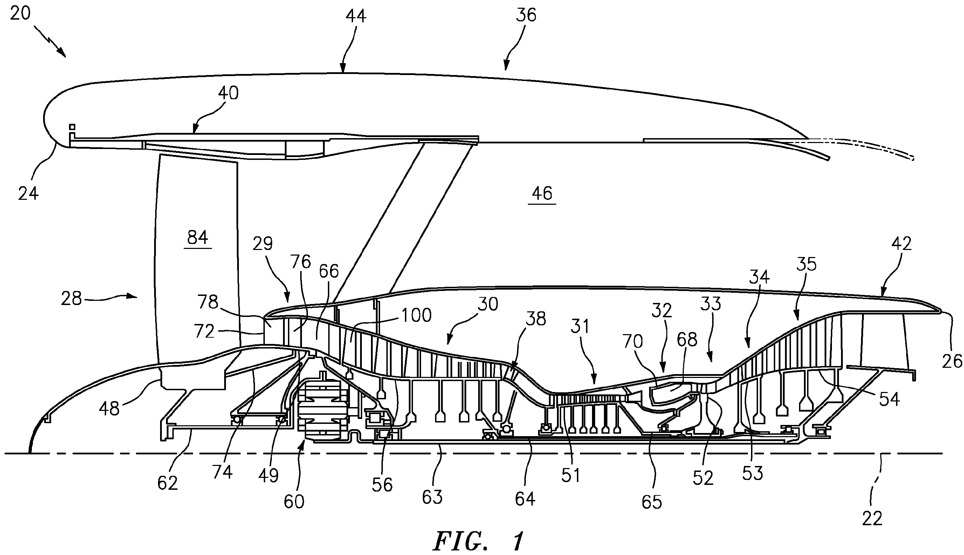

FIG. 1 is a partial sectional illustration of a geared turbofan turbine engine 20. The turbine engine 20 extends along an axial centerline 22 between an upstream airflow inlet 24 and a downstream airflow exhaust 26. The turbine engine 20 includes a fan section 28, a compressor section, a combustor section 32 and a turbine section. The compressor section includes a low pressure compressor (LPC) section 29, an intermediate pressure compressor (IPC) section 30 and a high pressure compressor (HPC) section 31. The turbine section includes a high pressure turbine (HPT) section 33, an intermediate pressure turbine (IPT) section 34 and a low pressure turbine (LPT) section 35.

The engine sections 28-35 are arranged sequentially along the centerline 22 within an engine housing 36. This housing 36 includes an inner (e.g., core) casing 38 and an outer (e.g., fan) casing 40. The inner casing 38 houses the LPC section 29 and the engine sections 30-35, which form a multi-spool core of the turbine engine 20. The outer casing 40 houses at least the fan section 28. The engine housing 36 also includes an inner (e.g., core) nacelle 42 and an outer (e.g., fan) nacelle 44. The inner nacelle 42 houses and provides an aerodynamic cover for the inner casing 38. The outer nacelle 44 houses and provides an aerodynamic cover the outer casing 40. The outer nacelle 44 also overlaps a portion of the inner nacelle 42 thereby defining a bypass gas path 46 radially between the nacelles 42 and 44. The bypass gas path 46, of course, may also be partially defined by the outer casing 40 and/or other components of the turbine engine 20.

Each of the engine sections 28-31 and 33-35 includes a respective rotor 48-54. Each of these rotors 48-54 includes a plurality of rotor blades (e.g., fan blades, compressor blades or turbine blades) arranged circumferentially around and connected to one or more respective rotor disks. The rotor blades, for example, may be formed integral with or mechanically fastened, welded, brazed, adhered and/or otherwise attached to the respective rotor disk(s).

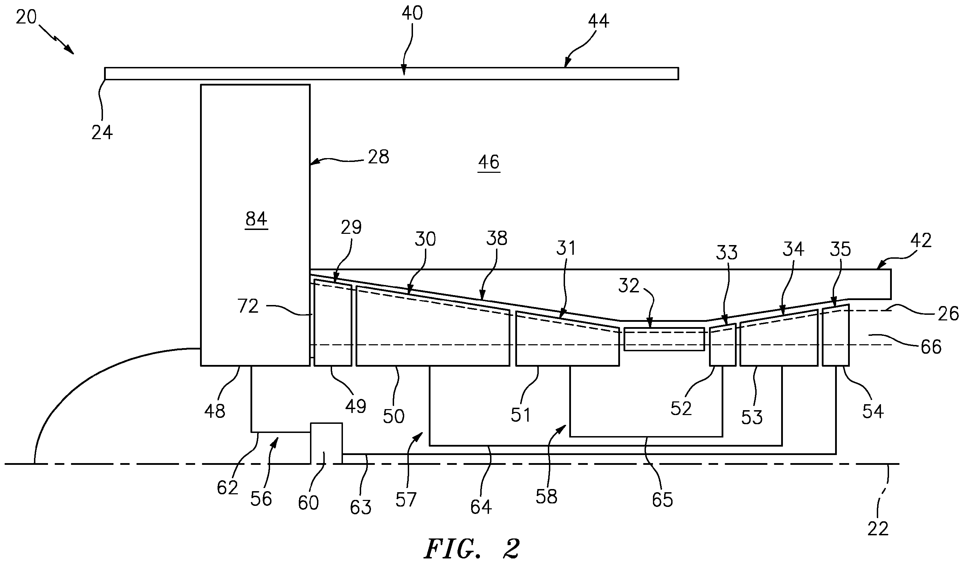

Referring to FIG. 2, the rotors 48-54 are respectively configured into a plurality of rotating assemblies 56-58. The first rotating assembly 56 includes the fan rotor 48, the LPC rotor 49 and the LPT rotor 54. The first rotating assembly 56 also includes a gear train 60 and one or more shafts 62 and 63, which gear train 60 may be configured as an epicyclic gear train with a planetary or star gear system. The LPC rotor 49 is connected to the fan rotor 48. The fan rotor 48 is connected to the gear train 60 through the fan shaft 62. The LPC rotor 49 is therefore connected to the gear train 60 through the fan rotor 48 and the fan shaft 62. The gear train 60 is connected to and driven by the LPT rotor 54 through the low speed shaft 63.

The second rotating assembly 57 includes the IPC rotor 50 and the IPT rotor 53. The second rotating assembly 57 also includes an intermediate speed shaft 64. The IPC rotor 50 is connected to and driven by the IPT rotor 53 through the intermediate speed shaft 64.

The third rotating assembly 58 includes the HPC rotor 51 and the HPT rotor 52. The third rotating assembly 58 also includes a high speed shaft 65. The HPC rotor 51 is connected to and driven by the HPT rotor 52 through the high speed shaft 65.

Referring to FIG. 1, one or more of the shafts 62-65 may be coaxial about the centerline 22. One or more of the shafts 63-65 may also be concentrically arranged. The low speed shaft 63 is disposed radially within and extends axially through the intermediate speed shaft 64. The intermediate speed shaft 64 is disposed radially within and extends axially through the high speed shaft 65. The shafts 62-65 are rotatably supported by a plurality of bearings; e.g., rolling element and/or thrust bearings. Each of these bearings is connected to the engine housing 36 (e.g., the inner casing 38) by at least one stationary structure such as, for example, an annular support strut.

During operation, air enters the turbine engine 20 through the airflow inlet 24. This air is directed through the fan section 28 and into a core gas path 66 and the bypass gas path 46. The core gas path 66 flows sequentially through the engine sections 29-35. The air within the core gas path 66 may be referred to as "core air". The air within the bypass gas path 46 may be referred to as "bypass air".

The core air is compressed by the compressor rotors 49-51 and directed into a combustion chamber 68 of a combustor 70 in the combustor section 32. Fuel is injected into the combustion chamber 68 and mixed with the compressed core air to provide a fuel-air mixture. This fuel air mixture is ignited and combustion products thereof flow through and sequentially cause the turbine rotors 52-54 to rotate. The rotation of the turbine rotors 52-54 respectively drive rotation of the compressor rotors 51-49 and, thus, compression of the air received from a core airflow inlet 72. The rotation of the turbine rotor 54 also drives rotation of the fan rotor 48, which propels bypass air through and out of the bypass gas path 46. The propulsion of the bypass air may account for a majority of thrust generated by the turbine engine 20, e.g., more than seventy-five percent (75%) of engine thrust. The turbine engine 20 of the present disclosure, however, is not limited to the foregoing exemplary thrust ratio.

The exemplary LPC rotor 49 of FIG. 1 includes a rotor disk 74 and one set of compressor blades 76. These compressor blades 76 are arranged around and connected to the rotor disk 74 as described above. The compressor blades 76 are adjacent to and downstream of a set of stator vanes 78. These stator vanes 78 may be positioned generally at the inlet 72 to the core gas path 66. In other embodiments, however, the stator vanes 78 may be positioned downstream of the compressor blades 76. In still other embodiments, an additional set of stator vanes may be positioned downstream and adjacent the compressor blades 76.

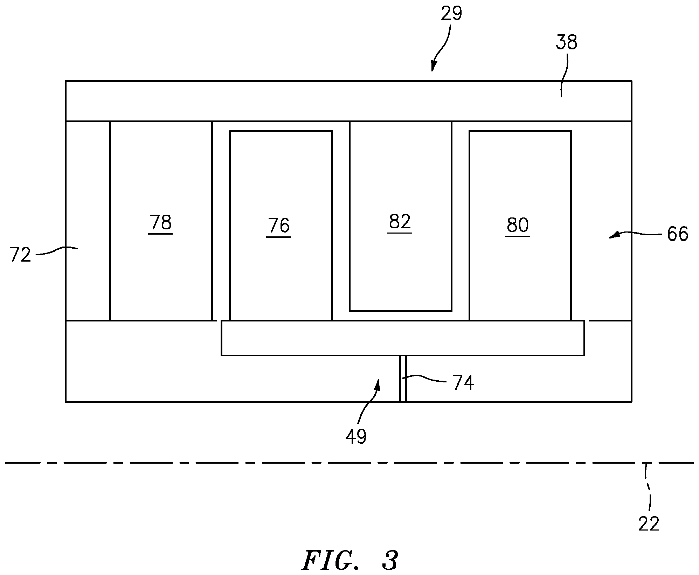

While the LPC rotor 49 is described above as including a single set of compressor blades 76, the turbine engine 20 of the present disclosure is not limited to such a configuration. For example, referring to FIG. 3, the LPC rotor 49 may alternatively include two sets of compressor blades 76 and 80 disposed at different axial locations along the rotor disk 74. The first set of compressor blades 76, for example, is positioned adjacent and downstream of the stator vanes 78. The second set of compressor blades 80 is positioned downstream of the first set of compressor blades 76. The two sets of compressors blades 76 and 80 may be separated by another set of stator vanes 82 so as to provide the LPC section 29 with two stages. Of course, in other embodiments, the LPC rotor 49 may include more than two sets of compressor blades and provide the LPC section 29 with more than two stages.

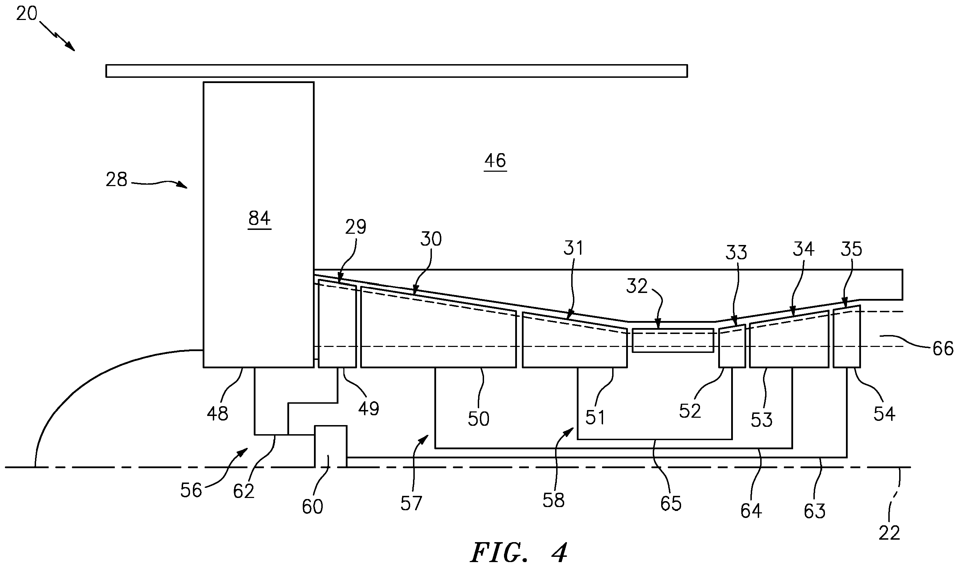

Referring to FIG. 4, the LPC rotor 49 may be connected to the fan shaft 62 and the gear train 60 independent of the fan rotor 48.

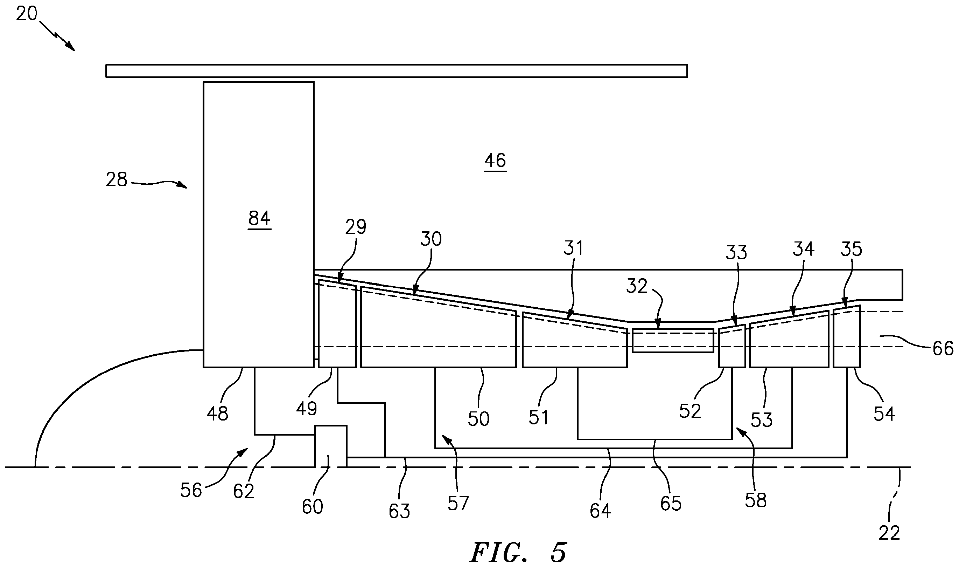

In FIG. 5, the LPC rotor 49 is connected directly to the low speed shaft 63 and, thus, independent of the gear train 60. With this configuration, the LPC rotor 49 and the LPT rotor 54 rotate at the same rotational velocity. In contrast, the LPC rotor 49 of FIGS. 1, 2 and 4 rotates at a slower rotational velocity than the LPT rotor 54 due to reduction gearing of the gear train 60.

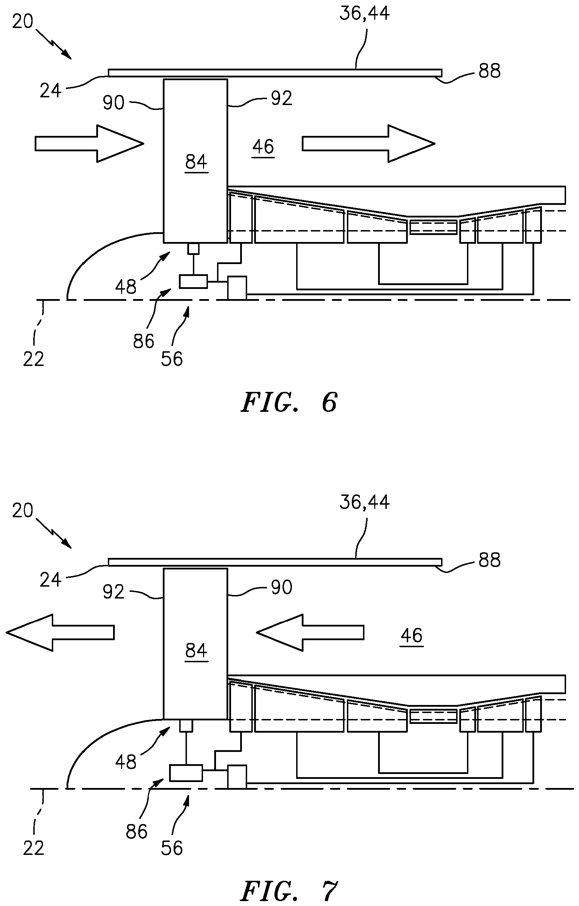

In some arrangements, the fan blades 84 may be configured as fixed blades and fixedly connected to the fan rotor 48 as illustrated in FIG. 5. In embodiments, referring to FIG. 6, one or more of the fan blades 84 are configured as variable pitch fan blades and may be pivotally connected to a hub of the fan rotor 48. With this configuration, a pitch of each respective fan blade 84 may be changed using an actuation system 86 within the hub of the fan rotor 48. This actuation system 86 may be configured for limited variable pitch. Alternatively, the actuation system 86 may be configured for full variable pitch where, for example, fan blade pitch may be partially or completely reversed.

By reversing fan blade pitch, the fan blades 84 may be moved between a first (e.g., forward thrust) position as shown in FIG. 6 and a second (e.g., reverse thrust) position as shown in FIG. 7. In the first position of FIG. 6, the fan blades 84 and the fan rotor 48 may be operable to provide forward thrust; e.g., push air through an exhaust 88 of the bypass gas path 46 as described above. Leading edges 90 of the fan blades 84, for example, may be axially forward of trailing edges 92 of the fan blades 84. In the second position of FIG. 7, the fan blades 84 and the fan rotor 48 may be operable to provide reverse thrust; e.g., push air through the airflow inlet 24. The leading edges 90 of the fan blades 84, for example, may be axially aft of the trailing edges 92 of the fan blades 84. With such a configuration, the turbine engine 20 may be configured without a traditional thrust reverser in the outer nacelle 44.

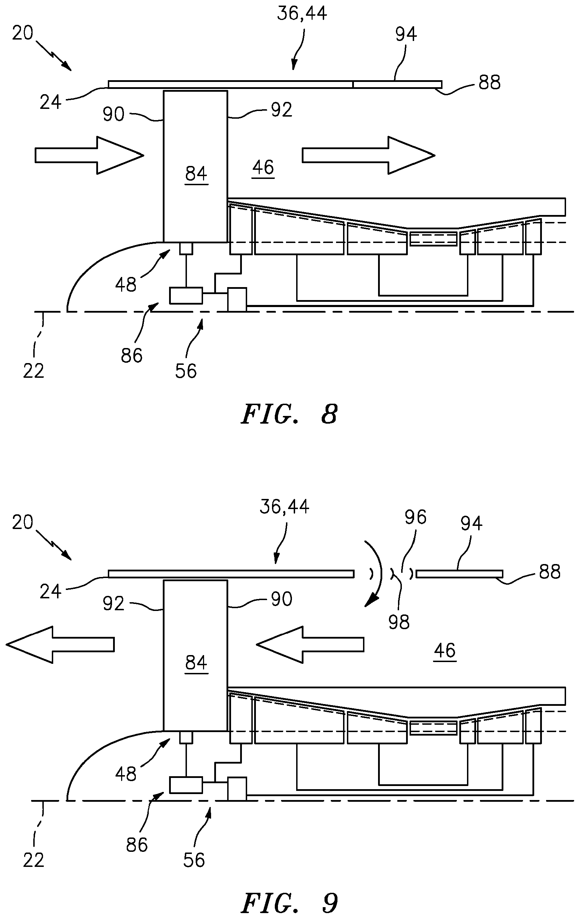

When providing reverse thrust, air may flow into the bypass gas path 46 through the exhaust 88 as shown in FIG. 7. The outer nacelle 44 includes an aft translating sleeve 94 as shown in FIGS. 8 and 9. When the fan blades 84 are in the second position (see FIG. 9) for providing reverse thrust, the sleeve 94 may be translated aft so as to open a passageway 96 through the outer nacelle 44. This passageway 96 may include one or more turning scoops 98 so as to assist in redirecting air into the bypass gas path 46. These turning scoops 98 may be in the form of stationary turning vanes and/or radially deployable turning vanes. However, when the fan blades 84 are in the first position (see FIG. 8) for providing forward thrust, the sleeve 94 may be translated forwards so as to close the passageway 96 and stow the turning scoops 98.

As the fan blades 84 move from the first position to the second position, the leading edges 90 may turn in a forward direction. Here the forward direction is "forward" relative to rotation of the fan rotor 48. For example, if the fan rotor 48 is turning in a clockwise direction, the leading edge 90 of each respective fan blade 84 may start moving in a clockwise direction before it reverses pitch and moves in a counter-clockwise direction. However, in other embodiments, as the fan blades 84 move from the first position to the second position, the leading edges 90 may turn in a reverse direction.

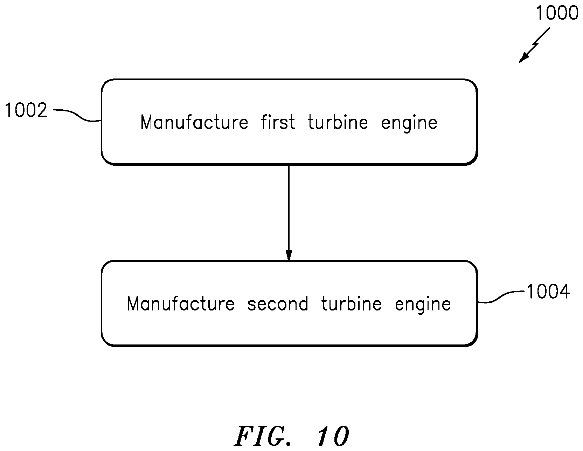

FIG. 10 is a flow diagram of a method 1000 for manufacturing a plurality of turbine engines. These turbine engines may be manufactured by a common entity; e.g., a manufacturer. The turbine engines may also or alternatively be manufactured for a common entity; e.g., a customer or end user. The turbine engines may still also or alternatively be manufactured generally contemporaneously, in common production run / cycle and/or during back-to-back production runs / cycles.

In step 1002, a first turbine engine is manufactured. In step 1004, a second turbine engine is manufactured. The first turbine engine and/or the second turbine engine may each have a configuration generally similar to the turbine engine 20 embodiments described above. However, the first turbine engine may be configured for a first thrust rating whereas the second turbine engine may be configured for a second thrust rating that is different (e.g., lower) than the first thrust rating. For example, the first thrust rating may be lOx whereas the second thrust rating may be 7x. The method 1000 of the present disclosure, however, is not limited to the foregoing exemplary thrust rating ratio.

The thrust ratings of the first and the second turbine engines may be dependent upon various parameters. These parameters may include, but are not limited to, the following:
▪ Geometry (e.g., shape and size) of the fan blades (e.g., 84);
▪ Number of the fan blades (e.g., 84);
▪ Geometry of the compressor blades (e.g., 76, 80);
▪ Number of the compressor blades (e.g., 76, 80);
▪ Number of stages in the LPC section (e.g., 29);
▪ Configuration of the gear train (e.g., 60); and
▪ Configuration components in and operation of the core.

The first and the second turbine engines may each be configured for its specific thrust rating by changing one or more of the foregoing parameters. However, if the first and the second turbine engines are each configured with substantially similar cores and one or more other parameters (e.g., geometry of compressor blades and/or fan blades, number of LPC stages, gear train gearing, etc.) are changed to achieve the desired thrust ratings, then time and costs associated with engineering and/or manufacturing the first and the second turbine engines may be reduced. For example, if the first and the second turbine engines are configured with multi-spool cores having substantially similar configurations, then more than about fifty percent (50%) of the components included in the first turbine engine may be substantially similar to corresponding components in the second turbine engine. Thus, a single set of core components and/or other components may be engineered and manufactured for use in both the first and the second turbine engines. This commonality in turn may reduce research and development time and costs as well as manufacturing time and costs.

The phrase "substantially similar" is used herein to describe a set of components with generally identical configurations; e.g., sizes, geometries, number of rotor stages, etc. However, the components need not be completely identical. For example, in some embodiments, substantially similar components may be made of different materials and/or have different coatings. In some embodiments, substantially similar components may include different accessory mounts and/or locate accessories at different positions. In some embodiments, substantially similar components may include different cooling passages, different seals, different cooling features (e.g., turbulators or fins), etc.

In some embodiments, the first and the second turbine engines may include substantially similar multi-spool cores as described above. For example, the inner case of the first turbine engine and the inner case of the second turbine engine may have substantially similar configurations. The combustor 70 of the first turbine engine and the combustor 70 of the second turbine engine may also or alternatively have substantially similar configurations. However, corresponding rotor blades in one or more of the engine sections may be slightly different. For example, an upstream-most set of compressor blades 100 (see FIG. 1) in the core of the first turbine engine may define a cross-sectional annular first area. An upstream-most set of compressor blades 100 in the core of the second turbine engine may define a cross-sectional annular second area which is slightly different than the first area. The second area, for example, may be within plus/minus twenty percent (+/- 20%) of the first area.

The first and the second turbine engines are described above with certain commonalities and certain differences. These commonalities and differences, however, may change depending upon the specific thrust rating requirements, customer requirements, government agency requirements, etc. The present disclosure therefore is not limited to the exemplary embodiments described above.

The present disclosure is not limited to the exemplary turbine engine 20 configurations described above. In some embodiments, for example, the core may include more than two rotating assemblies; e.g., three spools, four spools, etc. The core, for example, may include an additional intermediate compressor rotor and an additional intermediate turbine rotor connected together by an additional intermediate speed shaft. In some embodiments, the rotating assembly may include at least one additional compressor rotor where, for example, the LPC rotor 49 and the additional compressor rotor are arranged on opposite sides of the gear train 60. Furthermore, the present disclosure is not limited to a typical turbine engine configuration with the fan section 28 forward of the core (e.g., engine sections 30-35). In other embodiments, for example, the turbine engine 20 may be configured as a geared pusher fan engine or another type of gear turbine engine. The present invention therefore is not limited to any particular types or configurations of turbine engines.

The present invention is not to be restricted except in light of the attached claims.

## Claims

1. A turbine engine (20), comprising:
a fan rotor (48), a first compressor rotor (49), a second compressor rotor (50), a combustor (70), a first turbine rotor (54), a second turbine rotor (53), and a gear train (60), wherein the fan rotor (48) and the first compressor rotor (49) are connected to the first turbine rotor (54) through the gear train (60), the second compressor rotor (50) is connected to the second turbine rotor (53);
a first shaft (63) connecting the gear train (60) to the first turbine rotor (54); and
a second shaft (64) connecting the second compressor rotor (50) to the second turbine rotor (53) wherein the first shaft (63) extends through the second shaft (64), wherein the first compressor rotor (49) is connected to the first gear train (60) independent of the fan rotor (48) or the first compressor rotor (49) is connected to the gear train (60) through the fan rotor (48),
wherein:
a fan section (28), a Low Pressure Compressor section (29), an Intermediate Pressure Compressor section (30), a combustor section (32), an Intermediate Pressure Turbine section (34) and a Low Pressure Turbine section (35) are arranged along a centerline (22) within an engine housing (36);
the fan section (28) includes the fan rotor (48), the Low Pressure Compressor section (29) includes the first compressor rotor (49), the Intermediate Pressure Compressor section (30) includes the second compressor rotor (50), the Intermediate Pressure Turbine section (34) includes the second turbine rotor (53), and the Low Pressure Turbine section (35) includes the first turbine rotor (54); and
the fan rotor (48) includes one or more variable pitch fan blades (84) wherein the variable pitch fan blades (84) are configured to move between a first position and a second position, the fan rotor (48) is operable to provide forward thrust where the variable pitch fan blades are in the first position,
wherein
the engine further comprises:
a third compressor rotor (51);
a third turbine rotor (52), wherein the third compressor rotor (51) is connected to the third turbine rotor (52); and
a third shaft (65) connecting the third compressor rotor (51) to the third turbine rotor (52), wherein the second shaft (64) extends through the third shaft (65);
the fan rotor (48) is operable to provide reverse thrust where the variable pitch fan blades (84) are in the second position;
the fan section (28), the Low Pressure Compressor section (29), the Intermediate Pressure Compressor section (30), a High Pressure Compressor section (31), the combustor section (32), a High Pressure Turbine section (33), the Intermediate Pressure Turbine section (34) and the Low Pressure Turbine section (35) are arranged sequentially along the centerline (22) within the engine housing (36), wherein the High Pressure Compressor section (31) includes the third compressor rotor (51) and the High Pressure Turbine section (33) includes the third turbine rotor (52); and
the engine further comprises a nacelle (44) housing the fan rotor (48), wherein the nacelle (44) includes a translating sleeve (94) configured to open a passageway (96) through the nacelle (44) when the variable pitch fan blades (84) are in the second position, and the translating sleeve (94) is configured to close the passageway (96) when the variable pitch fan blades (84) are in the first position.

2. The turbine engine of claim 1, wherein the first compressor rotor (49) includes a first set of compressor blades (76) and a second set of compressor blades (80) downstream of the first set of compressor blades (76).

3. The turbine engine of claim 1, further comprising:
a first rotating assembly (56) including said fan rotor (48), said first compressor rotor (49), said first turbine rotor (54) and said gear train (60);
a second rotating assembly (57) including said second compressor rotor (50) and said second turbine rotor (53); and
a third rotating assembly (58) including said third compressor rotor (51) and said third turbine rotor (52).

4. The turbine engine of claim 3, wherein the gear train (60) connects the fan rotor (48) to the first shaft (63).

5. The turbine engine of claim 3 or 4, wherein the first compressor rotor (49) consists essentially of a rotor disk (74) and a set of compressor blades (76) arranged around and connected to the rotor disk (74).

6. The turbine engine of any of claims 3 to 5, wherein the first compressor rotor (49) includes
a rotor disk (74);
a first set of compressor blades (76) arranged around and connected to the rotor disk (74); and
a second set of compressor blades (80) arranged around and connected to the rotor disk (74) downstream of the first set of compressor blades (76).

7. The turbine engine of any preceding claim, wherein a leading edge (90) of a first of the variable pitch fan blades (84) moves in a forward direction as that blade moves from the first position to the second position.

## Patentansprüche

1. Turbinentriebwerk (20), umfassend:
einen Fan-Rotor (48), einen ersten Verdichterrotor (49), einen zweiten Verdichterrotor (50), eine Brennkammer (70), einen ersten Turbinenrotor (54), einen zweiten Turbinenrotor (53) und einen Getriebezug (60), wobei der Fan-Rotor (48) und der erste Verdichterrotor (49) mit dem ersten Turbinenrotor (54) durch den Getriebezug (60) verbunden sind, der zweite Verdichterrotor (50) mit dem zweiten Turbinenrotor (53) verbunden ist;
eine erste Welle (63), die den Getriebezug (60) mit dem ersten Turbinenrotor (54) verbindet; und
eine zweite Welle (64), die den zweiten Verdichterrotor (50) mit dem zweiten Turbinenrotor (53) verbindet, wobei sich die erste Welle (63) durch die zweite Welle (64) erstreckt, wobei der erste Verdichterrotor (49) mit dem ersten Getriebezug (60) unabhängig von dem Fan-Rotor (48) verbunden ist oder der erste Verdichterrotor (49) mit dem Getriebezug (60) durch den Fan-Rotor (48) verbunden ist,
wobei:
ein Fan-Abschnitt (28), ein Niederdruckverdichterabschnitt (29), ein Mitteldruckverdichterabschnitt (30), ein Brennkammerabschnitt (32), ein Mitteldruckturbinenabschnitt (34) und ein Niederdruckturbinenabschnitt (35) entlang einer Mittellinie (22) innerhalb eines Triebwerksgehäuses (36) angeordnet sind;
der Fan-Abschnitt (28) den Fan-Rotor (48) beinhaltet, der Niederdruckverdichterabschnitt (29) den ersten Verdichterrotor (49) beinhaltet, der Mitteldruckverdichterabschnitt (30) den zweiten Verdichterrotor (50) beinhaltet, der Mitteldruckturbinenabschnitt (34) den zweiten Turbinenrotor (53) beinhaltet und der Niederdruckturbinenabschnitt (35) den ersten Turbinenrotor (54) beinhaltet; und
der Fan-Rotor (48) eine oder mehrere verstellbare Fan-Laufschaufeln (84) beinhaltet, wobei die verstellbaren Fan-Laufschaufeln (84) so konfiguriert sind, dass sie sich zwischen einer ersten Position und einer zweiten Position bewegen, wobei der Fan-Rotor (48) so betrieben werden kann, dass er einen Vortriebsschub bereitstellt, bei dem sich die verstellbaren Fan-Laufschaufeln in der ersten Position befinden,
wobei das Triebwerk ferner Folgendes umfasst:
einen dritten Verdichterrotor (51);
einen dritten Turbinenrotor (52), wobei der dritte Verdichterrotor (51) mit dem dritten Turbinenrotor (52) verbunden ist; und
eine dritte Welle (65), die den dritten Verdichterrotor (51) mit dem dritten Turbinenrotor (52) verbindet, wobei sich die zweite Welle (64) durch die dritte Welle (65) erstreckt;
der Fan-Rotor (48) so betrieben werden kann, dass er einen Umkehrschub bereitstellt, bei dem sich die verstellbaren Fan-Laufschaufeln (84) in der zweiten Position befinden;
der Fan-Abschnitt (28), der Niederdruckverdichterabschnitt (29), der Mitteldruckverdichterabschnitt (30), ein Hochdruckverdichterabschnitt (31), der Brennkammerabschnitt (32), ein Hochdruckturbinenabschnitt (33), der Mitteldruckturbinenabschnitt (34) und der Niederdruckturbinenabschnitt (35) nacheinander entlang der Mittellinie (22) innerhalb des Triebwerksgehäuses (36) angeordnet sind, wobei der Hochdruckverdichterabschnitt (31) den dritten Verdichterrotor (51) beinhaltet und der Hochdruckturbinenabschnitt (33) den dritten Turbinenrotor (52) beinhaltet; und
das Triebwerk ferner eine Gondel (44) umfasst, die den Fan-Rotor (48) unterbringt, wobei die Gondel (44) eine Schiebehülse (94) beinhaltet, die so konfiguriert ist, dass sie einen Durchgang (96) durch die Gondel (44) öffnet, wenn sich die verstellbaren Fan-Laufschaufeln (84) in der zweiten Position befinden, und wobei die Schiebehülse (94) so konfiguriert ist, dass sie den Durchgang (96) schließt, wenn sich die verstellbaren Fan-Laufschaufeln (84) in der ersten Position befinden.

2. Turbinentriebwerk nach Anspruch 1, wobei der erste Verdichterrotor (49) einen ersten Satz Verdichterlaufschaufeln (76) und einen zweiten Satz Verdichterlaufschaufeln (80) stromabwärts des ersten Satzes von Verdichterlaufschaufeln (76) beinhaltet.

3. Turbinentriebwerk nach Anspruch 1, ferner Folgendes umfassend:
eine erste rotierende Baugruppe (56), die den Fan-Rotor (48), den ersten Verdichterrotor (49), den ersten Turbinenrotor (54) und den Getriebezug (60) beinhaltet;
eine zweite rotierende Baugruppe (57), die den zweiten Verdichterrotor (50) und den zweiten Turbinenrotor (53) beinhaltet; und
eine dritte rotierende Baugruppe (58), die den dritten Verdichterrotor (51) und den dritten Turbinenrotor (52) beinhaltet.

4. Turbinentriebwerk nach Anspruch 3, wobei der Getriebezug (60) den Fan-Rotor (48) mit der ersten Welle (63) verbindet.

5. Turbinentriebwerk nach Anspruch 3 oder 4, wobei der erste Verdichterrotor (49) im Wesentlichen aus einer Rotorscheibe (74) und einem Satz Verdichterlaufschaufeln (76), die um die Rotorscheibe (74) angeordnet und mit dieser verbunden sind, besteht.

6. Turbinentriebwerk nach einem der Ansprüche 3 bis 5, wobei der erste Verdichterrotor (49) Folgendes beinhaltet
eine Rotorscheibe (74);
einen ersten Satz Verdichterlaufschaufeln (76), die um die Rotorscheibe (74) angeordnet und mit dieser verbunden sind; und
einen zweiten Satz Verdichterlaufschaufeln (80), die stromabwärts des ersten Satzes Verdichterlaufschaufeln (76) um die Rotorscheibe (74) angeordnet und mit dieser verbunden sind.

7. Turbinentriebwerk nach einem der vorstehenden Ansprüche, wobei sich eine Vorderkante (90) einer ersten der verstellbaren Fan-Laufschaufeln (84) in einer Vorwärtsrichtung bewegt, wenn sich diese Laufschaufel von der ersten Position auf die zweite Position bewegt.

## Revendications

1. Moteur à turbine (20), comprenant :
un rotor de soufflante (48), un premier rotor de compresseur (49), un deuxième rotor de compresseur (50), une chambre de combustion (70), un premier rotor de turbine (54), un deuxième rotor de turbine (53) et un train d'engrenages (60), dans lequel le rotor de soufflante (48) et le premier rotor de compresseur (49) sont reliés au premier rotor de turbine (54) par l'intermédiaire du train d'engrenages (60), le deuxième rotor de compresseur (50) est relié au deuxième rotor de turbine (53) ;
un premier arbre (63) reliant le train d'engrenages (60) au premier rotor de turbine (54) ; et
un deuxième arbre (64) reliant le deuxième rotor de compresseur (50) au deuxième rotor de turbine (53) dans lequel le premier arbre (63) s'étend à travers le deuxième arbre (64), dans lequel le premier rotor de compresseur (49) est relié au premier train d'engrenages (60) indépendant du rotor de soufflante (48) ou le premier rotor de compresseur (49) est relié au train d'engrenages (60) par l'intermédiaire du rotor de soufflante (48),
dans lequel :
une section de soufflante (28), une section de compresseur basse pression (29), une section de compresseur à pression intermédiaire (30), une section de chambre de combustion (32), une section de turbine à pression intermédiaire (34) et une section de turbine basse pression (35) sont agencées le long d'une ligne médiane (22) à l'intérieur d'un carter de moteur (36) ;
la section de soufflante (28) comporte le rotor de soufflante (48), la section de compresseur basse pression (29) comporte le premier rotor de compresseur (49), la section de compresseur à pression intermédiaire (30) comporte le deuxième rotor de compresseur (50), la section de turbine à pression intermédiaire (34) comporte le deuxième rotor de turbine (53) et la section de turbine basse pression (35) comporte le premier rotor de turbine (54) ; et
le rotor de soufflante (48) comporte une ou plusieurs pales de soufflante à pas variable (84) dans lequel les pales de soufflante à pas variable (84) sont configurées pour se déplacer entre une première position et une seconde position, le rotor de soufflante (48) peut fonctionner pour fournir une poussée avant où les pales de soufflante à pas variable sont dans la première position,
dans lequel le moteur comprend en outre :
un troisième rotor de compresseur (51) ;
un troisième rotor de turbine (52), dans lequel le troisième rotor de compresseur (51) est relié au troisième rotor de turbine (52) ; et
un troisième arbre (65) reliant le troisième rotor de compresseur (51) au troisième rotor de turbine (52), dans lequel le deuxième arbre (64) s'étend à travers le troisième arbre (65) ;
le rotor de soufflante (48) peut fonctionner pour fournir une poussée inverse lorsque les pales de soufflante à pas variable (84) sont dans la seconde position ;
la section de soufflante (28), la section de compresseur basse pression (29), la section de compresseur à pression intermédiaire (30), une section de compresseur haute pression (31), la section de chambre de combustion (32), une section de turbine haute pression (33), la section de turbine à pression intermédiaire (34) et la section de turbine basse pression (35) sont agencées séquentiellement le long de la ligne médiane (22) à l'intérieur du carter de moteur (36), dans lequel la section de compresseur haute pression (31) comporte le troisième rotor de compresseur (51) et la section de turbine haute pression (33) comporte le troisième rotor de turbine (52) ; et
le moteur comprend en outre une nacelle (44) logeant le rotor de soufflante (48), dans lequel la nacelle (44) comporte un manchon de translation (94) configuré pour ouvrir un passage (96) à travers la nacelle (44) lorsque les pales de soufflante à pas variable (84) sont dans la seconde position, et le manchon de translation (94) est configuré pour fermer le passage (96) lorsque les pales de soufflante à pas variable (84) sont dans la première position.

2. Moteur à turbine selon la revendication 1, dans lequel le premier rotor de compresseur (49) comporte un premier ensemble de pales de compresseur (76) et un second ensemble de pales de compresseur (80) en aval du premier ensemble de pales de compresseur (76).

3. Moteur à turbine selon la revendication 1, comprenant en outre :
un premier ensemble rotatif (56) comportant ledit rotor de soufflante (48), ledit premier rotor de compresseur (49), ledit premier rotor de turbine (54) et ledit train d'engrenages (60) ;
un deuxième ensemble rotatif (57) comportant ledit deuxième rotor de compresseur (50) et ledit deuxième rotor de turbine (53) ; et
un troisième ensemble rotatif (58) comportant ledit troisième rotor de compresseur (51) et ledit troisième rotor de turbine (52).

4. Moteur à turbine selon la revendication 3, dans lequel le train d'engrenages (60) relie le rotor de soufflante (48) au premier arbre (63).

5. Moteur à turbine selon la revendication 3 ou 4, dans lequel le premier rotor de compresseur (49) se compose essentiellement d'un disque de rotor (74) et d'un ensemble de pales de compresseur (76) agencées autour du disque de rotor (74) et reliées à celui-ci.

6. Moteur à turbine selon l'une quelconque des revendications 3 à 5, dans lequel le premier rotor de compresseur (49) comporte un disque de rotor (74) ;
un premier ensemble de pales de compresseur (76) agencées autour du disque de rotor (74) et reliées à celui-ci ; et
un second ensemble de pales de compresseur (80) agencées autour du disque de rotor (74) et reliées à celui-ci en aval du premier ensemble de pales de compresseur (76).

7. Moteur à turbine selon une quelconque revendication précédente, dans lequel un bord d'attaque (90) d'une première des pales de soufflante à pas variable (84) se déplace dans une direction avant lorsque cette pale se déplace de la première position à la seconde position.
